# EUROPEAN PATENT APPLICATION

(11) **EP 4 537 969 A1**
(43) Date of publication of application: **16.04.2025**
(21) Application number: 23819960.8
(22) Date of filing: 13.03.2023
(51) Int. Cl.: B23K 26/03, B23K 26/06, G02B 5/08, G02B 13/00

(54) **LASER PROCESSING APPARATUS**

(30) Priority: 08.06.2022 KR 20220069249
(71) Applicant: K Lab Co., Ltd., Gunpo-si, Gyeonggi-do 15847 (KR)
(72) Inventor: KWON, Goo Cheol, Gunpo-si Gyeonggi-do 15874 (KR)
(74) Representative: Nederlandsch Octrooibureau
(86) International application number: PCT/KR2023/003343
(87) International publication number: WO 2023/239021

(57) **Abstract**

The present disclosure relates to a laser processing apparatus. The laser processing apparatus according to embodiments of the present disclosure includes: a laser oscillator configured to output a laser beam; a pair of galvano mirrors configured to deflect the laser beam output from the laser oscillator according to processing data for a workpiece; an F-θ lens configured to radiate the laser beam deflected by the pair of galvano mirrors toward the workpiece; and an image acquisition unit configured to acquire an image of the workpiece through light incident from the workpiece through the F-θ lens, wherein the image acquisition unit is disposed in a traveling path of the light incident from the workpiece through the f-θ lens and is disposed so as not to cross a traveling path of the laser beam radiated from the laser oscillator to the pair of galvano mirrors.

## Description

### Technical Field

The present disclosure relates to a laser processing apparatus, and more particularly, to a laser processing apparatus capable of more accurately monitoring a processing state of a workpiece in real time with a simpler structure.

### Background Art

In general, a laser processing apparatus is an apparatus that performs various types of processing processes, such as welding, cutting, hole drilling, and marking, on a workpiece by using a laser.

When a user creates and inputs a processing pattern to be processed by an external input device such as a computer, the laser processing apparatus deflects and scans a laser beam in two-dimension by driving a galvanometer scanner including a pair of galvano mirrors according to laser processing data based on the processing pattern and performs processing on a workpiece by controlling the on/off of a laser oscillator that outputs a laser beam in synchronization with the operation of the galvanometer scanner.

Meanwhile, in order for the laser processing apparatus to perform the processing work on the workpiece more accurately, it is very important to accurately monitor the processing state of the workpiece in real time while the processing work is being performed.

As such, there are various methods for monitoring a processing state of a laser processing apparatus for a workpiece, but most laser processing apparatuses use a method of photographing a processing state of a workpiece by using a vision camera. At this time, the vision camera is usually installed on one side of a galvanometer scanner or on one side of a stage supporting a workpiece.

For example, Korean Patent Publication No. 10-2013-0073050 (Laser processing apparatus and correction data generation method thereof) (published on July 3, 2013) discloses a technology for generating photographing data for an image of a laser beam focused on a mask by using a camera unit installed on one side of a stage on which a workpiece is loaded.

However, the conventional laser processing apparatus disclosed in the above patent document, etc. had an increased overall volume due to the vision camera installed on one side of the galvanometer scanner or on one side of the stage, and also had a problem in that the processing state of the workpiece could not be accurately measured due to an occurrence of distortion.

To solve these problems, a technology is introduced which installs a vision camera inside a laser processing apparatus such as a galvanometer scanner.

For example, Korean Patent Publication No. 10-1216684 (Marking image reading device and reading method of laser marking system) (published on December 31, 2012) discloses a technology in which a vision camera is disposed between a beam expander and a scan head to capture a marking image of a marking target reflected by X, Y galvano mirrors of the scan head to determine a marking position and a presence or absence of defects in marking quality.

However, the conventional laser processing apparatus disclosed in the above patent document has a problem in that, since the vision camera captures the marking image reflected by the X, Y galvano mirrors of the scan head (galvanometer scanner), only an image of a very small area of an entire marking area seen through the X, Y galvano mirrors may be acquired.

Therefore, there is a need for a laser processing apparatus capable of more accurately monitoring a processing state of a workpiece in real time with a simpler structure.

### Disclosure

### Technical Problem

The present disclosure has been made to improve the problems described above, and an object to be achieved by the present disclosure is to provide a laser processing apparatus in which an image acquisition unit that acquires an image of a workpiece through light incident from the workpiece through an F-θ lens is disposed so as not to cross a traveling path of light radiated from a laser oscillator to a pair of galvano mirrors, and thus, it is possible to more accurately monitor the processing state of the workpiece with a simpler structure because the image area of the workpiece acquired by the image acquisition unit may be expanded.

The technical problems of the present disclosure are not limited to those described above, and other technical problems that are not mentioned herein will be clearly understood from the following description by those of ordinary skill in the art.

### Technical Solution

To achieve the object, a laser processing apparatus according to embodiments of the present disclosure includes: a laser oscillator configured to output a laser beam; a pair of galvano mirrors configured to deflect the laser beam output from the laser oscillator according to processing data for a workpiece; an F-θ lens configured to radiate the laser beam deflected by the pair of galvano mirrors toward the workpiece; and an image acquisition unit configured to acquire an image of the workpiece through light incident from the workpiece through the F-θ lens, wherein the image acquisition unit is disposed in a traveling path of the light incident from the workpiece through the f-θ lens and is disposed so as not to cross a traveling path of the laser beam radiated from the laser oscillator to the pair of galvano mirrors.

As an example, the laser processing apparatus further includes a first dichroic mirror disposed in the traveling path of the laser beam radiated from the pair of galvano mirrors through the F-θ lens, wherein the first dichroic mirror is configured to reflect the laser beam radiated from the laser oscillator through the pair of galvano mirrors and radiate the laser beam onto the F-θ lens, and to transmit the light incident from the workpiece through the F-θ lens and radiate the light onto the image acquisition unit.

At this time, the laser processing apparatus further includes: a second dichroic mirror disposed in a traveling path of light incident from the F-θ lens through the first dichroic mirror; and a detection sensor configured to measure a processing state of the workpiece from the light incident from the workpiece through the F-θ lens, wherein the second dichroic mirror is configured to reflect light incident through the first dichroic mirror and radiate the light onto the image acquisition unit, and to transmit light incident through the first dichroic mirror and radiate the light onto the detection sensor.

Alternatively, the laser processing apparatus further includes: a second dichroic mirror disposed in a traveling path of light incident from the F-θ lens through the first dichroic mirror; and a detection sensor configured to measure a processing state of the workpiece from the light incident from the workpiece through the F-θ lens, wherein the second dichroic mirror is configured to transmit light incident through the first dichroic mirror and radiate the light onto the image acquisition unit, and to reflect light incident through the first dichroic mirror and radiate the light onto the detection sensor.

As another example, the laser processing apparatus further includes a first dichroic mirror disposed in the traveling path of the laser beam radiated from the pair of galvano mirrors through the F-θ lens, wherein the first dichroic mirror is configured to transmit the laser beam radiated from the laser oscillator through the pair of galvano mirrors and radiate the laser beam onto the F-θ lens, and to reflect the light incident from the workpiece through the F-θ lens and radiate the light onto the image acquisition unit.

At this time, the laser processing apparatus further includes: a second dichroic mirror disposed in a traveling path of light reflected by the first dichroic mirror; and a detection sensor configured to measure a processing state of the workpiece from the light incident from the workpiece through the F-θ lens, wherein the second dichroic mirror is configured to reflect incident light reflected by the first dichroic mirror and radiate the light onto the image acquisition unit, and to transmit incident light reflected by the first dichroic mirror and radiate the light onto the detection sensor.

Alternatively, the laser processing apparatus further includes: a second dichroic mirror disposed in a traveling path of light reflected by the first dichroic mirror; and a detection sensor configured to measure a processing state of the workpiece from the light incident from the workpiece through the F-θ lens, wherein the second dichroic mirror is configured to transmit incident light reflected by the first dichroic mirror and radiate the light onto the image acquisition unit, and to reflect incident light reflected by the first dichroic mirror and radiate the light onto the detection sensor.

Specific details of other embodiments are included in the detailed description and drawings.

### Advantageous Effects

In a laser processing apparatus according to embodiments of the present disclosure, an image acquisition unit that acquires an image of a workpiece through light incident from the workpiece through an F-θ lens is disposed so as not to cross a traveling path of light radiated from a laser oscillator to a pair of galvano mirrors. Accordingly, since the image area of the workpiece acquired by the image acquisition unit may be expanded, it is possible to more accurately monitor the processing state of the workpiece W with a simpler structure.

In particular, a laser processing apparatus according to a first embodiment of the present disclosure uses a dichroic mirror, which is disposed in a traveling path of a laser beam radiated from a pair of galvano mirrors through an F-θ lens, to reflect a laser beam radiated from a laser oscillator through the pair of galvano mirrors and radiate the laser beam onto the F-θ lens, and to transmit light incident from a workpiece through the F-θ lens and radiate the light onto an image acquisition unit, thereby expanding the image area of the workpiece acquired by the image acquisition unit.

In addition, in a laser processing apparatus according to a second embodiment of the present disclosure, an image acquisition unit that acquires an image of a workpiece through light incident from the workpiece through an F-θ lens and a detection sensor that measures the processing state of the workpiece are disposed so as not to cross a traveling path of a laser beam radiated from a laser oscillator to a pair of galvano mirrors. Accordingly, the image area of the workpiece acquired by the image acquisition unit may be expanded and it is possible to more accurately monitor the processing state of the workpiece through the detection sensor.

The effects of the present disclosure are not limited to those described above, and other effects that are not mentioned herein will be clearly understood from the description of the claims by those of ordinary skill in the art.

### Description of Drawings

FIG. 1 is a diagram schematically illustrating a structure of a laser processing apparatus according to embodiments of the present disclosure.
FIG. 2 is a perspective view schematically illustrating a structure of a laser processing apparatus according to a first embodiment of the present disclosure.
FIG. 3 is a diagram schematically illustrating the structure of the laser processing apparatus according to the first embodiment of the present disclosure.
FIG. 4 is a diagram schematically illustrating a modification of the laser processing apparatus according to the first embodiment of the present disclosure.
FIG. 5 is a diagram schematically illustrating a structure of a laser processing apparatus according to a second embodiment of the present disclosure.
FIG. 6 is a diagram schematically illustrating a modification of the laser processing apparatus according to the second embodiment of the present disclosure.

### Best Mode

Hereinafter, preferred embodiments of the present disclosure will be described in detail with reference to the accompanying drawings, so that those of ordinary skill in the art can easily carry out the present disclosure.

In describing the embodiments, descriptions of technologies that are well known in the technical field to which the present disclosure belongs and are not directly related to the present disclosure will be omitted. By omitting unnecessary description, the present disclosure may be described more clearly without obscuring the gist of the present disclosure.

For the same reason, some elements in the accompanying drawings are exaggerated, omitted, or schematically illustrated. Also, the size of each element does not entirely reflect the actual size. The same reference numerals are assigned to the same or corresponding elements in the drawings.

In addition, it will be understood that the expressions and terms as used herein with respect to device or element orientation (e.g., "front," "back," "up," "down," "top," "bottom," "left," "right," "lateral," etc.) are only used to simplify the description of the present disclosure and do not necessarily indicate or imply that the relevant device or element should have a particular direction.

Hereinafter, the present disclosure will be described with reference to the drawings for explaining a laser processing apparatus according to an embodiment of the present disclosure.

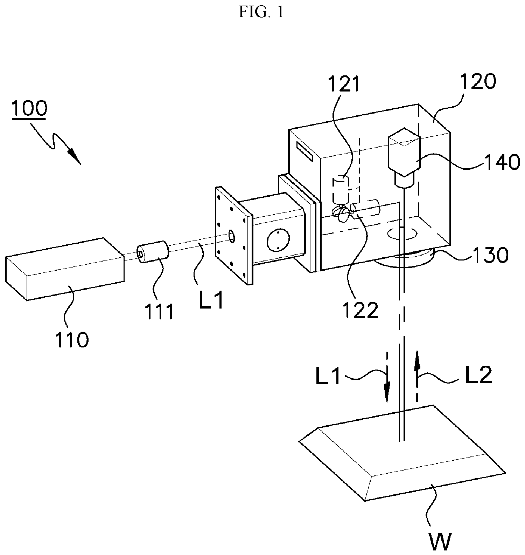

FIG. 1 is a diagram schematically illustrating a structure of a laser processing apparatus according to embodiments of the present disclosure.

As illustrated in FIG. 1, a laser processing apparatus 100 according to embodiments of the present disclosure may be configured to include a laser oscillator 110, a galvanometer scanner 120, an F-θ lens 130, and an image acquisition unit 140. The laser processing apparatus 100 may perform various types of processing processes on a workpiece W and may monitor the state of the workpiece W in real time while the processing process is performed on the workpiece W.

The laser oscillator 110 may output a laser beam L1 that is used for a laser processing process for the workpiece W. The laser oscillator 110 may be classified into a solid-state laser oscillator such as a Nd:YAG laser, a gas laser such as a CO2 laser, a liquid laser oscillator, etc., according to a medium used therein. For example, in the case of the Nd:YAG laser widely used for laser marking, the laser oscillator 110 of the laser processing apparatus 100 may include a laser diode used as a light source, an Nd:YAG rod that amplifies light, a Q-Switch that increases power of the laser beam L1 so as to radiate the laser beam L1 in a pulse mode of an appropriate frequency, and a damper that opens and closes the output of the laser beam L1. The laser beam L1 output from the laser oscillator 110 passes through a beam expander 111. At this time, the magnitude of the laser beam L1 may be increased.

The galvanometer scanner 120 may radiate the laser beam L1 output from the laser oscillator 110 toward the workpiece W according to laser processing data.

As illustrated in FIG. 1, the galvanometer scanner 120 may include a pair of galvano mirrors 121 and 122 that deflect the laser beam L1 output from the laser oscillator 110 according to processing data for the workpiece W. The galvano mirrors 121 and 122 may radiate the laser beam L1 in the X-axis or Y-axis direction when the galvano mirrors 121 and 122 are driven to be rotated in a left-and-right direction by an actuator such as a motor according to a control signal input according to processing data.

The F-θ lens 130 may be disposed below the galvanometer scanner 120 and may radiate the laser beam L1 deflected by the pair of galvano mirrors 121 and 122 toward the workpiece W. Although not illustrated, when the area to be laser-processed is wide, a beam splitter that splits the laser beam L1 by using transmittance of a mirror may be installed, and a galvanometer scanner and an F-θ lens may be additionally installed as many as the number of laser beams L1 to be split. For example, when a 50% beam splitter is used, the laser beam L1 may be split into two laser beams, and thus, the laser processing area may be approximately doubled.

The image acquisition unit 140 may be positioned in the traveling path of light L2 incident from the workpiece W through the F-θ lens 130, and the image of the workpiece W may be acquired through the light L2 incident from the workpiece W through the F-θ lens 130. At this time, the image acquired by the image acquisition unit 140 is a broad concept that includes images and videos.

For convenience of explanation, FIG. 1 illustrates an example in which the workpiece W has a thin plate shape and a work surface of the workpiece W is flat, but the present disclosure is not limited thereto, and the work surface of the workpiece W may be curved.

Preferably, the image acquisition unit 140 may use a vision camera including a charge coupled device (CCD) image sensor as a sensor that acquires an image by converting light into an electrical signal.

Meanwhile, although not illustrated, the workpiece W is supported while being seated on a workpiece W support (not shown) and may be moved in the X-axis, Y-axis, and Z-axis directions or rotated around the X-axis, Y-axis, and Z-axis by the workpiece W support as necessary. In addition, the image acquisition unit 140 may be moved in the X-axis, Y-axis and Z-axis directions or rotated around the X-axis, Y-axis and Z-axis by a separate driving device as necessary.

Preferably, the image acquisition unit 140 constituting the laser processing apparatus 100 according to embodiments of the present disclosure may be disposed in the traveling path of the light L2 incident from the workpiece W through the f-θ lens 130, and may be disposed so as not to cross the traveling path of the laser beam L1 radiated from the laser oscillator 110 to the pair of galvano mirrors 121 and 122.

As described above, in the laser processing apparatus 100 according to embodiments of the present disclosure, the image acquisition unit 140 that acquires the image of the workpiece W through the light L2 incident from the workpiece W through the F-θ lens 130 is disposed so as not to cross the traveling path of the laser beam L1 radiated from the laser oscillator 110 to the pair of galvano mirrors 121 and 122. Accordingly, since the image area of the workpiece W acquired by the image acquisition unit 140 may be expanded, it is possible to more accurately monitor the processing state of the workpiece W with a simpler structure.

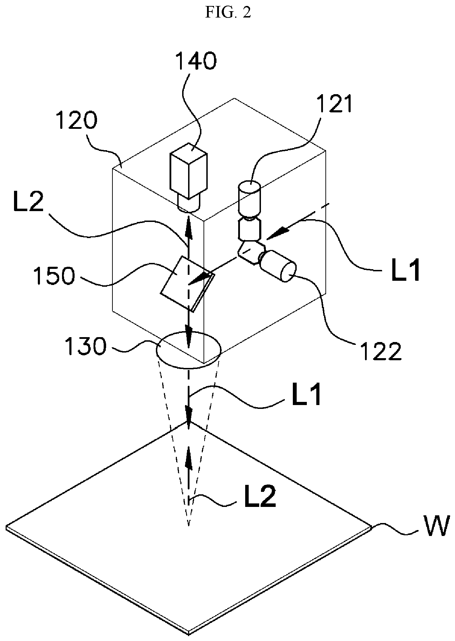

Hereinafter, various embodiments of the laser processing apparatus 100 according to embodiments of the present disclosure are described with reference to FIGS. 2 to 6. First, a structure of a laser processing apparatus 100 according to a first embodiment of the present disclosure is described with reference to FIGS. 2 to 4.

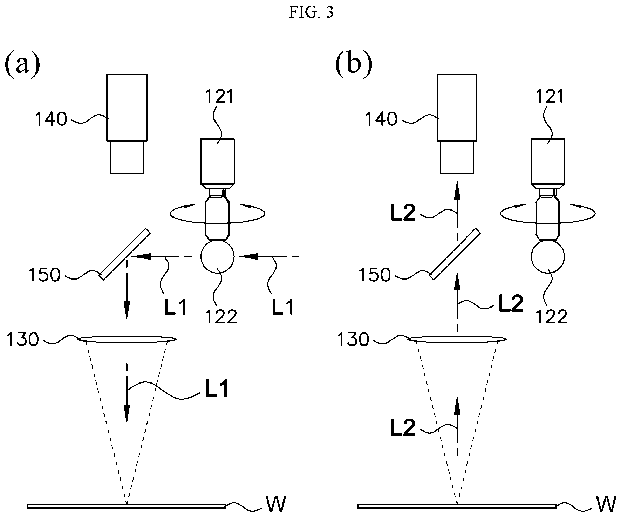

FIG. 2 is a perspective view schematically illustrating the structure of the laser processing apparatus according to the first embodiment of the present disclosure, and FIG. 3 is a diagram schematically illustrating the structure of the laser processing apparatus according to the first embodiment of the present disclosure.

As illustrated in FIG. 2, the laser processing apparatus 100 according to the first embodiment of the present disclosure may be configured to include a laser oscillator 110, a galvanometer scanner 120, an f-θ lens 130, an image acquisition unit 140, and a first dichroic mirror 150.

As illustrated in FIGS. 2 and 3, the first dichroic mirror 150 may be disposed in a traveling path of a laser beam L1 radiated from a pair of galvano mirrors 121 and 122 through the F-θ lens 130. The dichroic mirror is a reflector made of many thin layers of materials with different refractive indices and has the property of reflecting light of a certain color and transmitting light of the other colors.

Preferably, the first dichroic mirror 150 constituting the laser processing apparatus 100 according to the first embodiment of the present disclosure may reflect the laser beam L1 radiated from the laser oscillator 110 through the pair of galvano mirrors 121 and 122 and radiate the laser beam L1 onto the F-θ lens 130, and may transmit light L2 incident from the workpiece W through the F-θ lens 130 and radiate the light L2 onto the image acquisition unit 140.

That is, as illustrated in FIGS. 2 and 3, in the case of the laser processing apparatus 100 according to the first embodiment of the present disclosure, the laser oscillator 110 and the galvanometer scanner 120 may be disposed on one side with respect to the first dichroic mirror 150, and the f-θ lens 130 and the image acquisition unit 140 may be respectively disposed below and above the first dichroic mirror 150.

Accordingly, as illustrated in (a) of FIG. 3, the first dichroic mirror 150 may reflect the laser beam L1 radiated from the laser oscillator 110 through the pair of galvano mirrors 121 and 122 and radiate the first laser beam L1 onto the F-θ lens 130, and as illustrated in (b) of FIG. 3, the first dichroic mirror 150 may transmit the light L2 incident from the workpiece W through the F-θ lens 130 and radiate the light L2 onto the image acquisition unit 140.

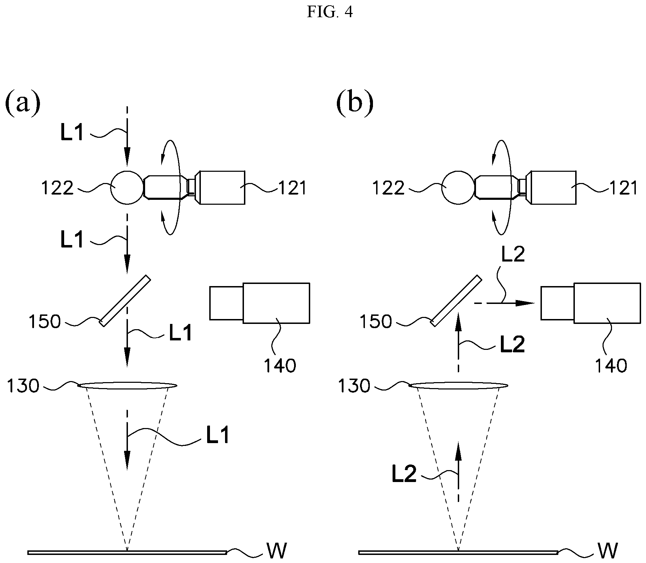

FIG. 4 is a diagram schematically illustrating a modification of the laser processing apparatus according to the first embodiment of the present disclosure.

As illustrated in FIG. 4, the first dichroic mirror 150 may be disposed in the traveling path of the laser beam L1 radiated from the pair of galvano mirrors 121 and 122 through the F-θ lens 130, as in the example illustrated in FIG. 3.

However, as illustrated in FIG. 4, the modification of the laser processing apparatus 100 according to the first embodiment of the present disclosure differs from the example illustrated in FIG. 3 in that the laser oscillator 110 and the galvanometer scanner 120 are positioned above the first dichroic mirror 150, the f-θ lens 130 is positioned below the first dichroic mirror 150, and the image acquisition unit 140 is positioned on one side of the first dichroic mirror 150.

Therefore, in the case of the modification of the laser processing apparatus 100 according to the first embodiment of the present disclosure, as illustrated in (a) of FIG. 4, the first dichroic mirror 150 may transmit the laser beam L1 radiated from the laser oscillator 110 through the pair of galvano mirrors 121 and 122 and radiates the laser beam L1 onto the F-θ lens 130, and as illustrated in (b) of FIG. 4, the first dichroic mirror 150 may reflect the light L2 incident from the workpiece W through the F-θ lens 130 and radiate the light L2 onto the image acquisition unit 140.

As described above, the laser processing apparatus 100 according to the first embodiment of the present disclosure uses the dichroic mirror, which is disposed in the traveling path of the laser beam L1 radiated from the pair of galvano mirrors 121 and 122 through the F-θ lens 130, to reflect the laser beam L1 radiated from the laser oscillator 110 through the pair of galvano mirrors 121 and 122 and radiate the laser beam L1 onto the F-θ lens 130, and to transmit the light L2 incident from the workpiece W through the F-θ lens 130 and radiate the light L2 onto the image acquisition unit 140, thereby expanding the image area of the workpiece W acquired by the image acquisition unit 140.

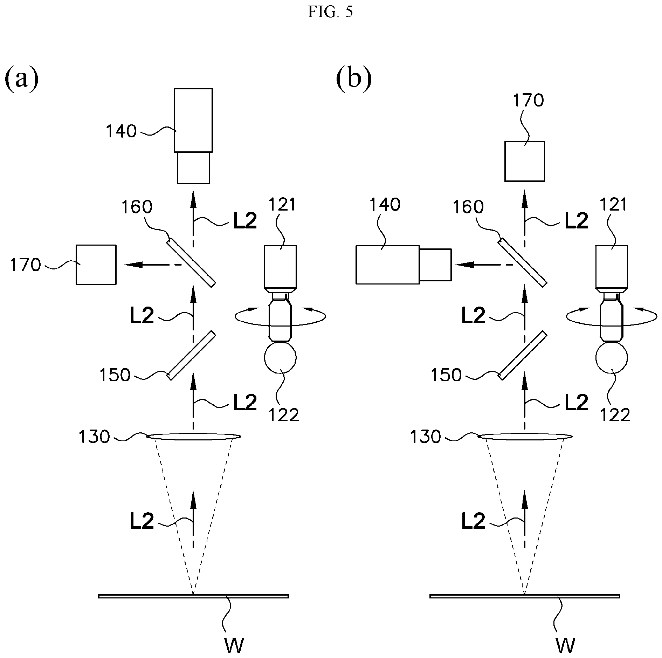

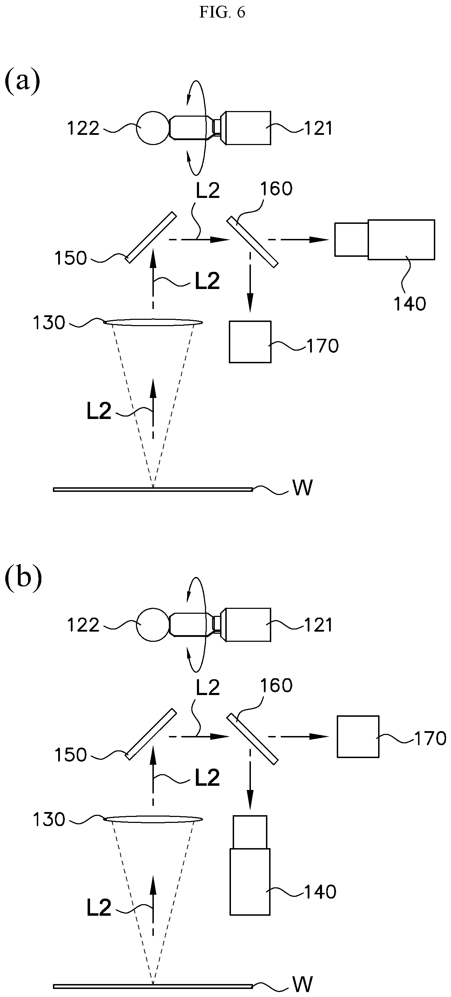

Hereinafter, a laser processing apparatus 100 according to a second embodiment of the present disclosure is described with reference to FIGS. 5 and 6. For convenience of explanation, a description of the same structure and process as those of the first embodiment illustrated in FIGS. 2 to 4 is omitted and only the differences are described below.

The laser processing apparatus 100 according to the second embodiment of the present disclosure differs from the first embodiment illustrated in FIGS. 2 to 4 in that the laser processing apparatus 100 further includes a detection sensor 170 that measures the processing state of the workpiece W, as well as an image acquisition unit 140 that acquires the shape of the workpiece W so as to confirm the processing state of the workpiece W, .

FIG. 5 is a diagram schematically illustrating the structure of the laser processing apparatus according to the second embodiment of the present disclosure.

As illustrated in FIG. 5, the laser processing apparatus 100 according to the second embodiment of the present disclosure may be configured to include a laser oscillator 110, a galvanometer scanner 120, an f-θ lens 130, an image acquisition unit 140, a first dichroic mirror 150, a second dichroic mirror 160, and a detection sensor 170.

As in the first embodiment illustrated in FIG. 3, the first dichroic mirror 150 illustrated in FIG. 5 may be disposed in a traveling path of a laser beam L1 radiated from a pair of galvano mirrors 121 and 122 through the F-θ lens 130. Accordingly, the first dichroic mirror 150 may reflect the laser beam L1 radiated from the laser oscillator 110 through the pair of galvano mirrors 121 and 122 and radiate the laser beam L1 onto the F-θ lens 130, and may transmit light L2 incident from the workpiece W through the F-θ lens 130 and radiate the light L2 onto image acquisition unit 140.

In addition, as illustrated in FIG. 5, the second dichroic mirror 160 may be positioned in the traveling path of the light L2 incident from the F-θ lens 130 through the first dichroic mirror 150. That is, in the example of FIG. 5, when the F-θ lens 130 and the image acquisition unit 140 are respectively positioned below and above the first dichroic mirror 150, the second dichroic mirror 160 may be positioned above the first dichroic mirror 150.

In addition, the detection sensor 170 may be positioned adjacent to the second dichroic mirror 160 and may measure the processing state of the workpiece W from the light L2 incident from the workpiece W through the f-θ lens 130. The detection sensor 170 may use a light sensor such as a photodiode sensor and may measure the wavelength, frequency, etc. of the light L2 incident from the workpiece W through the f-θ lens 130 to determine the processing state of the workpiece W, such as the welding state of the workpiece W.

The example of (a) in FIG. 5 illustrates an example in which the detection sensor 170 is positioned on one side of the second dichroic mirror 160, and the example of (b) of FIG. 5 illustrates an example in which the detection sensor 170 is positioned above the second dichroic mirror 160.

Therefore, as illustrated in (a) of FIG. 5, the second dichroic mirror 160 may transmit the light L2 incident through the first dichroic mirror 150 and radiate the light L2 onto the image acquisition unit 140, and may reflect the light L2 incident through the first dichroic mirror 150 and radiate the light L2 onto the detection sensor 170. Alternatively, as illustrated in (b) of FIG. 5, the second dichroic mirror 160 may reflect the light L2 incident through the first dichroic mirror 150 and radiate the light L2 onto the image acquisition unit 140, and may transmit the light L2 incident through the first dichroic mirror 150 and radiate the light L2 onto the detection sensor 170.

FIG. 6 is a diagram schematically illustrating a modification of the laser processing apparatus according to the second embodiment of the present disclosure.

As in the modification of the first embodiment illustrated in FIG. 4, the first dichroic mirror 150 illustrated in FIG. 5 may be positioned in the traveling path of the laser beam L1 radiated from the pair of galvano mirrors 121 and 122 through the F-θ lens 130, may transmit the laser beam L1 radiated from the laser oscillator 110 through the pair of galvano mirrors 121 and 122 and radiates the laser beam L1 onto the F-θ lens 130, and may reflect the light L2 incident from the workpiece W through the F-θ lens 130 and radiate the light L2 onto the image acquisition unit 140.

In addition, as illustrated in FIG. 6, the second dichroic mirror 160 may be positioned in the traveling path of the light L2 reflected by the first dichroic mirror 150. That is, in the example of FIG. 6, when the image acquisition unit 140 is positioned on one side of the first dichroic mirror 150, the second dichroic mirror 160 may be positioned between the first dichroic mirror 150 and the image acquisition unit 140 on one side of the first dichroic mirror 150.

In addition, the detection sensor 170 may be positioned adjacent to the second dichroic mirror 160 and may measure the processing state of the workpiece W from the light L2 incident from the workpiece W through the f-θ lens 130. The example of (a) in FIG. 6 illustrates an example in which the detection sensor 170 is positioned below the second dichroic mirror 160, and the example of (b) of FIG. 6 illustrates an example in which the detection sensor 170 is positioned on one side of the second dichroic mirror 160.

Therefore, as illustrated in (a) of FIG. 6, the second dichroic mirror 160 may transmit incident light reflected by the first dichroic mirror 150 and radiate the light onto the image acquisition unit 140, and may reflect incident light reflected by the first dichroic mirror 150 and radiate the light onto the detection sensor 170. Therefore, as illustrated in (b) of FIG. 6, the second dichroic mirror 160 may reflect incident light reflected by the first dichroic mirror 150 and radiate the light onto the image acquisition unit 140, and may transmit incident light reflected by the first dichroic mirror 150 and radiate the light onto the detection sensor 170.

As described above, in the laser processing apparatus 100 according to the second embodiment of the present disclosure, the image acquisition unit 140 that acquires the image of the workpiece W through the light L2 incident from the workpiece W through the F-θ lens 130 and the detection sensor 170 that measures the processing state of the workpiece W are disposed so as not to cross the traveling path of the laser beam L1 radiated from the laser oscillator 110 to the pair of galvano mirrors 121 and 122. Accordingly, the image area of the workpiece W acquired by the image acquisition unit 140 may be expanded and it is possible to more accurately monitor the processing state of the workpiece W through the detection sensor 170.

Meanwhile, the present specification and drawings disclose preferred embodiments of the present disclosure. Although specific terms are used, these terms are used only in a general sense to easily explain the technical concept of the present disclosure and help understanding of the present disclosure and are not intended to limit the scope of the present disclosure. In addition to the embodiments disclosed herein, it will be apparent to those of ordinary skill in the art that other modifications based on the technical idea of the present disclosure are possible.

### Industrial Applicability

The present disclosure relates to a laser processing apparatus, and more particularly, may be applicable to the technical field related to a laser processing apparatus capable of more accurately monitoring a processing state of a workpiece in real time with a simpler structure.

## Claims

1. A laser processing apparatus comprising:
a laser oscillator configured to output a laser beam;
a pair of galvano mirrors configured to deflect the laser beam output from the laser oscillator according to processing data for a workpiece;
an F-θ lens configured to radiate the laser beam deflected by the pair of galvano mirrors toward the workpiece; and
an image acquisition unit configured to acquire an image of the workpiece through light incident from the workpiece through the F-θ lens,
wherein the image acquisition unit is disposed in a traveling path of the light incident from the workpiece through the f-θ lens and is disposed so as not to cross a traveling path of the laser beam radiated from the laser oscillator to the pair of galvano mirrors.

2. The laser processing apparatus of claim 1, further comprising a first dichroic mirror disposed in the traveling path of the laser beam radiated from the pair of galvano mirrors through the F-θ lens,
wherein the first dichroic mirror is configured to reflect the laser beam radiated from the laser oscillator through the pair of galvano mirrors and radiate the laser beam onto the F-θ lens, and to transmit the light incident from the workpiece through the F-θ lens and radiate the light onto the image acquisition unit.

3. The laser processing apparatus of claim 2, further comprising:
a second dichroic mirror disposed in a traveling path of light incident from the F-θ lens through the first dichroic mirror; and
a detection sensor configured to measure a processing state of the workpiece from the light incident from the workpiece through the F-θ lens, wherein the second dichroic mirror is configured to reflect light incident through the first dichroic mirror and radiate the light onto the image acquisition unit, and to transmit light incident through the first dichroic mirror and radiate the light onto the detection sensor.

4. The laser processing apparatus of claim 2, further comprising:
a second dichroic mirror disposed in a traveling path of light incident from the F-θ lens through the first dichroic mirror; and
a detection sensor configured to measure a processing state of the workpiece from the light incident from the workpiece through the F-θ lens, wherein the second dichroic mirror is configured to transmit light incident through the first dichroic mirror and radiate the light onto the image acquisition unit, and to reflect light incident through the first dichroic mirror and radiate the light onto the detection sensor.

5. The laser processing apparatus further comprising a first dichroic mirror
disposed in the traveling path of the laser beam radiated from the pair of galvano mirrors through the F-θ lens,
wherein the first dichroic mirror is configured to transmit the laser beam radiated from the laser oscillator through the pair of galvano mirrors and radiate the laser beam onto the F-θ lens, and to reflect the light incident from the workpiece through the F-θ lens and radiate the light onto the image acquisition unit.

6. The laser processing apparatus of claim 5, further comprising:
a second dichroic mirror disposed in a traveling path of light reflected by the first dichroic mirror; and
a detection sensor configured to measure a processing state of the workpiece from the light incident from the workpiece through the F-θ lens, wherein the second dichroic mirror is configured to reflect incident light reflected by the first dichroic mirror and radiate the light onto the image acquisition unit, and to transmit incident light reflected by the first dichroic mirror and radiate the light onto the detection sensor.

7. The laser processing apparatus of claim 5, further comprising:
a second dichroic mirror disposed in a traveling path of light reflected by the first dichroic mirror; and
a detection sensor configured to measure a processing state of the workpiece from the light incident from the workpiece through the F-θ lens, wherein the second dichroic mirror is configured to transmit incident light reflected by the first dichroic mirror and radiate the light onto the image acquisition unit, and to reflect incident light reflected by the first dichroic mirror and radiate the light onto the detection sensor.
